# EUROPEAN PATENT APPLICATION

(11) **EP 1 324 611 A2**
(43) Date of publication of application: **02.07.2003**
(21) Application number: 02028764.5
(22) Date of filing: 23.12.2002
(51) Int. Cl.: H04N 7/24

(54) **Multimedia digital synchronization**

(30) Priority: 29.12.2001 US 40924; 20.01.2002 US 350433 P
(71) Applicant: Maa, Shalong, Dallas, Texas 75287 (US)
(72) Inventor: Maa, Shalong, Dallas, Texas 75287 (US)
(74) Representative: Saint-Marc, Christophe Andréas

(57) **Abstract**

Disclosed herein is an interactive home entertainment system in which all multimedia components, including the sound and the visual content of a streaming video on a display (900) and the sound and actuation of a physical doll (1 - FIG. 1) are digitally coordinated. Novel methods are provided to digitally control and coordinate the doll's sound and body-part movement. Said doll has at least one movable portion (1X - FIGS. 5-6), with the actuation thereof being provided by a two-state actuation device (56 - FIGS. 5-6). The doll's actuation control circuitry (36 - FIGS. 5-6) is feasible for digital control. A computer-implemented method for controlling and coordinating the doll's sound and actuation includes creating an actuation control signal sequence (83X - FIG. 7) based on the desired audio effect of the doll. As a result, the doll can be part of a live TV show and have conversation with an actor in said show.

## Description

The present European Patent Application claims the benefits of (i) U.S. Non-provisional Patent Application No.10/040,924 filed December 29, 2001, (ii) U.S. Provisional Patent Application No. 60/350,433 filed January 20, 2002, and (iii) U.S. Provisional Patent Application No. 60/421,493 filed October 28, 2002, of which the entire disclosures are incorporated fully herein by reference.

### FIELD OF THE INVENTION

The present invention pertains generally to multimedia home entertainment systems and, in particular, to interactive home entertainment system in which all multimedia components, including the sound and the visual content of a streaming video and the sound and actuation of a physical doll, are digitally synchronized.

### BACKGROUND OF THE INVENTION

With the increasing popularity of interactive electronic networks such as the Internet and the World Wide Web and the advent of digital streaming video technologies, the services of providing interactive content via the Internet are drawing more attention in the market place. For the purposes of providing the consumer public with new and better services and improving advertising effectiveness, there have been immense efforts in the industry to integrate the interactive media with the conventional electronic media such as television to provide the consumers with combined interactive multimedia contents and services. However, it is known that, almost all of the existing services thereof only focus on "unsynchronized" and/or "non-interactive" content integration, i.e., the multimedia contents transmitted through different media or network are not synchronized with one another. For examples: (i) the so-called interactive TV or Web-TV services employ the so-called set-top box or the like at the client side to provide said integration such that a home audience can access the Internet via said set-top box and interact with a web site, such as sending E-mail, through a television set, and (ii) in the so-called interactive TV broadcast system, the traditional audio-video television content (or streaming video) and the associated interactive application content are both provided by and transmitted from the broadcast center, etc. As a result thereof, it would not be feasible to integrate new digital media, such as the sound and animation of a physical doll ("toy figure"), into the prior art multimedia system. Furthermore, the actuation control mechanism employed in the prior art animated talking toy figure are not feasible for digital control and multimedia synchronization.

### SUMMARY OF THE INVENTION

Accordingly, an object of the present invention is to provide an interactive multimedia system of the type that all multimedia components therein, including the sound and the visual content of a digital streaming video and the sound and animation of a physical doll, are digitally synchronized with one another. Said streaming video may be transmitted from a TV broadcast center or from a Web site through the Internet.

Another object of the present invention is to provide an animated talking toy figure of the type feasible for digital control and multimedia synchronization.

To achieve the foregoing and other objects of the present invention and to remedy drawbacks of the prior art described above, there is provided a novel arrangement of digitally synchronized multimedia system, which includes a streaming video system and a physical animated talking toy figure adapted to be digitally controlled by a digital actuation control signal. Said actuation control signal is provided by a multimedia client computer, and is synchronized with other components of said multimedia. As a result thereof, the toy figure controlled by the computer can be part of a streaming video and talk to or communicate with an actor or character in said video.

(1) According to one aspect of the present invention, said streaming video is transmitted from a TV broadcast center; Streaming "toy control" data associated with said streaming video for providing synchronized sound and actuation control of a physical toy figure is transmitted from a web site; Server-side digital synchronization systems are provided for coupling with said TV broadcast system and said web site respectively such that, the transmission of the streaming video from the TV broadcast system to the user's home TV set is synchronized in a predefined manner with the transmission of said streaming toy control data associated therewith from the web site to the home user's client computer. (2) According to another aspect of the present invention, both the streaming video and the toy control data are transmitted from a web site to the client home computer through the Internet; Said client computer is provided with resolution amplification means so as to facilitate instant large-screen and high-resolution display of a "small-frame" streaming video transmitted through the Internet; (3) According to another aspect of the present invention, in order to synchronize the animation of a physical toy figure with other components of the multimedia, a computer-implemented synchronization method is provided for creating "digital actuation control signals" that are to be transmitted to the actuation-control circuitry of the toy figure in synchronization with the transmission of the sound signals of the toy to its sounding device from the computer; For example, the computer may be programmed to create digital actuation control signals according to arrangement of vowel letters in the textual content of the toy figure's speech synthesized by said computer; (4) According to yet another aspect of the present invention, said toy figure comprises a physical doll or the like having at least one articulated movable body part for providing animation effect; Disposed therein are a sounding device, such as a sound speaker, and a two-state actuation means for actuating the articulated body part of the toy figure; Said actuation means comprises a two-states or multi-states electromagnetic device, such as a solenoid, and an actuation-control circuitry for controlling said electromagnetic device according to said "digital actuation control signals" transmitted from said multimedia computer connected thereto; Said sounding device may be connected to and controlled by the sound subsystem of said computer.

The foregoing is intended to be merely a summary and not to limit the scope of the specification. The features of the present invention, which are believed to be novel, are set forth with particularity in the annexed claims. The invention, however, together with further objects and advantages thereof, may best be appreciated by reference to the following detailed description taken in conjunction with the drawings.

### BRIEF DESCRIPTION OF THE DRAWINGS

FIG. 1 illustrates an interactive home entertainment system for implementing the synchronization methods of the present invention.

FIG. 2 is a schematic illustration of a cross-section view of the interior arrangement the toy figure of the present invention, which is adapted to be connected to a home computer.

FIGS. 3-4 are schematic illustrations of two exemplary arrangements of attaching a movable body part of the toy figure of FIG. 2 to the adjacent stationary portion thereof and coupling said movable body part to a solenoid actuation device; FIG. 3 illustrates said toy figure's arm portion; FIG. 4 illustrates the movable portion of the toy figure's mouth.

FIGS. 5-6 are schematic functional block diagrams illustrating the interior arrangements of the toy figure of FIG. 2 and exemplary sound-animation control systems therein.

FIG. 7 is a functional block diagram depicting the animation control circuitry of FIGS. 5-6.

FIGS. 8-10 are illustrations of three exemplary computer-implemented methods, according to the present invention, for creating or sequencing binary logic switch control (or synchronization) signals for actuation control of the toy figure of FIG. 2 based on the textual content of the toy figure's audio speech.

FIG.11 schematically illustrates the transmission of a data stream through the Internet in synchronization with the transmission of a TV program signal stream according to the present inventions.

FIG. 12 is a schematic diagram showing an exemplary hand-held remote-control device of FIG. 1.

FIGS. 13-14 are pictorial representations of a multimedia display device, such as a TV set or a computer monitor, employed in the multimedia system of FIG. 1.

FIGS. 15-16 are schematic views of representative computer-TV windows shown on the display means of the multimedia system of FIGS. 1 in response to the respective user operation of the remote control devices of FIG. 12.

FIG. 17 is a schematic representation of a video image frame for illustrating the digital streaming video image enhancement method of the present invention.

FIGS. 18 are enlarged views of a portion of the image frame of FIG. 17 for depicting the image edge sharpening method of the present invention.

FIGS. 19 illustrate the method of obtaining color characters of newly added or amplified pixel of FIG. 17 according to the present invention; FIG. 19A is for representing the horizontal direction of the image frame of FIG. 17; FIG. 19B is for representing the vertical direction of the image frame of FIG. 17.

### DETAILED DESCRIPTION OF THE INVENTION

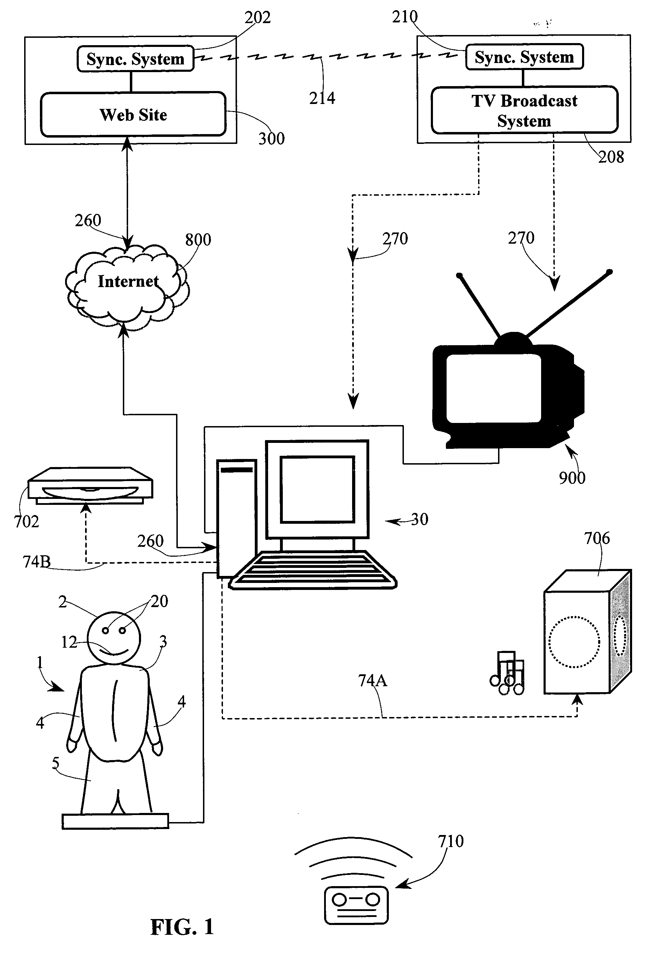

Referring to FIGS.1-19, there are shown new and improved digitally synchronized animated talking toy figure and interactive home entertainment systems and methods embodying the concepts of the present inventions. While the present inventions are susceptible to embodiments in various forms, there are in the drawings and will hereinafter be described presently preferred embodiments, with the understanding that the present disclosure is to be considered as exemplifications of the inventions, and does not limit the invention to the specific embodiments illustrated. In some instances, for purposes of explanation and not for limitation, specific numbers, diagrams, dimensions or materials, etc. may be set forth in order to provide a thorough understanding of the present invention. In other instances, detailed descriptions of well-known mechanical elements, electronic circuitry, or computer or electronic network components are omitted so as to not obscure the depiction of the present invention with unnecessary details. In case when alternate arrangements of a device or component are described or displayed, like parts or components may be assigned with the same numerical reference numbers.

With reference to FIG. 1, a home entertainment system includes a physical toy figure 1, a large-screen display such as a television set 900, a conventional multimedia personal computer 30, and a hand-held remote control device 710 for control of all other elements of the entertainment system. In addition, said home entertainment system may also include other entertainment devices, such as a sound system 706 and a DVD player 702, etc. The computer 30 is connected to a web site 300 via the Internet 800. A TV broadcast center 208 provides the conventional TV programs or streaming video 270 to the TV set 900 and/or to the computer 30. The streaming video 270 may also be transmitted from the web site 300 to the computer 30. The toy control data 260 for controlling the sound and animation of the toy figure 1 may be transmitted from the web site 300 to the computer 30 via the Internet or be created by the computer 30. According to one aspect of the present invention, the sound and animation of the toy figure 1 are digitally controlled and are synchronized with the audio and video contents or effects of an associated TV program or streaming video transmitted from the TV station 208 to the TV set 900. As a result thereof, the toy figure 1 controlled by the computer 30 can be part of a live TV show or TV program displayed on the TV set 900 and talk to or communicate with an actor or character in said TV show.

As shown in FIG.1, the Web site 300 and the TV broadcasting system 208 are provided with synchronization systems 202 and 210 respectively. In order for the Web site 300 to send Web content or data 260 to the client computer 30 in synchronization with the transmission of TV program signals 270 from the TV station 208 to the home TV 900, there is provided synchronization signals 214 for transmitting between the two synchronization systems 202 and 210. The synchronization signals 214 may be wireless signals or transmitted via physical wiring connections. The synchronization signals 214 may be transmitted, preferably, from the system 210 to the system 202, or vice versa, or it could be two way signals exchange between the two synchronization systems 210 and 202. As a result of such synchronization control, the toy figure 1 controlled by the computer 30 can be part of a TV show or program displayed on the TV set 900 and talk to or communicate with an actor or character therein.

One synchronization method, according to the present invention, is to divide the TV program signals 270 into a stream of small segments based on the desired Web content or data stream to be received by the client user computer 30 while broadcasting said TV program 270. This could be done at the production stage of said TV program. The segmentation information thereof may be stored in conjunction with and on the same storage media as the TV program itself. The function of the TV station synchronization system 210 is to retrieve said segmentation information and, in accordance therewith, send synchronization signals 214 to the synchronization system 202 of the Web site 300. The function of the Web site synchronization system 202 is to receive said synchronization signals 214, and, in accordance therewith, instruct the Web site 300 to send the desired data or media stream or content to the client 30. The Web site may employ the so-called "PUSH" technology or other commonly used technologies to sent the desired content or data to the client 30.

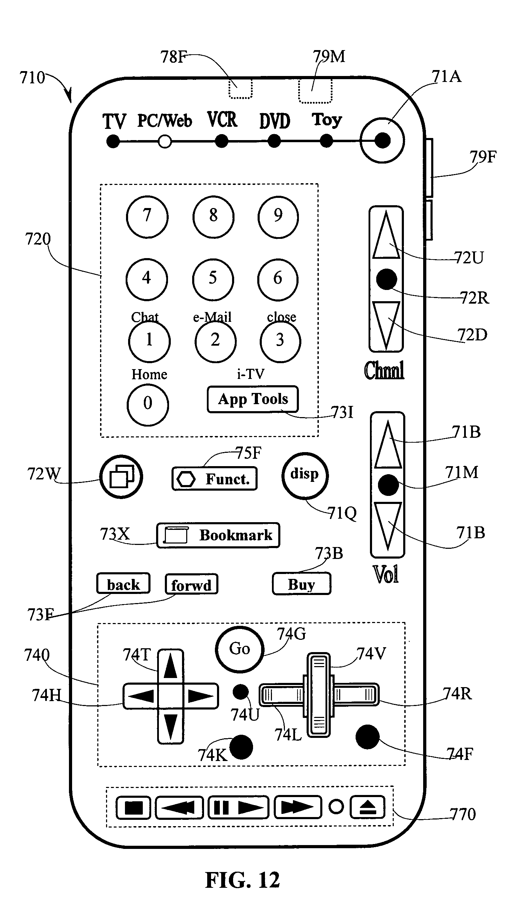

The synchronization process described above may be used to only synchronize the starting moment of a electronic media/data stream 260 transmitted from the Web site 300 to the computer 30 with the starting of a TV program signals stream 270 transmitted from the TV station 208. However, it is preferred that the synchronization is conducted throughout the flow of said two data/signal streams. As shown in FIG. 11, the TV signal stream 270 is divided into a stream of signal segments 270A, 270B, 270C..., which are generally represented by the reference number 270I; In association and in accordance therewith, the electronic media or data stream 260 transmitted from the Web server 300 to the client 30 is divided into a stream of digital segments 260A, 260B, 260C..., which are generally represented by the reference number 260I. Each segment 270I of the TV signal stream 270 is sequentially associated with a specific segment 260I of the electronic media or data stream 260 so as to coordinate the transmission of the data stream segment 260I from the Web site 300 to the client computer 30 according to the broadcasting of the respective TV program segment 270I from the TV station 208. To facilitate such synchronization, a synchronization signal(s) 214I is provided for each segment pair 260I-270I of the two data-signal streams 260 and 270. For examples, as shown in FIG.11, the segment pairs 260A-270A, 260B-270B, and 260C-270C are provided with synchronization signals 214A, 214B, and 214C respectively, etc.

The synchronization signals 214I are to be transmitted between the two synchronization systems 202 and 210 of FIG.1. During a one-way synchronization process, the synchronization signals 214I are to be transmitted from the synchronization system 210 of the TV station to the synchronization system 202 of the Web site 300. When the synchronization system 202 receives the signals 214I, it will instruct the Web site 300 to send the respective Web content or data stream segment 260I designated to the client computer 30. In this way, the Web site 300 can control the timing of sending a specific content or data to a client in response to receiving a synchronization signals 214I from said TV station. Similarly, the synchronization system may also be designed to allow the TV broadcast unit 208 to control the timing of broadcasting a specific segment 270I of the TV program 270 according to the synchronization system 210's receiving of a signal 214I from said Web site 300.

One skilled in the art would understand that, the above-described synchronization method could be used to synchronize the transmission of any type of video contents or data stream. For examples, (1) the data stream or Web contents 260 of FIG. 11 may be a sequence of toy control data for controlling the talking and animation of the toy figure 1 of FIG.1 through the computer 30; (2) The Web contents 260 may also be comprised of just a few Web pages in association with the TV program 270's specific section, such as an advertisement section for promoting a product.

In FIG. 1, the physical toy figure 1 is adapted to be connected to a multimedia computer 30. The computer 30 includes processing and sound subsystems for controlling the animation and/or sound of the toy figure 1. The "body" of the toy figure 1 may be a doll or the like, as depicted in the drawing as exemplifications, or it may represent a physical puppet animal or human or other type of living being or the like, or a selected body portion thereof, or it may be in form of any other type of commonly known three dimensional physical entertainment figure or puppet, and it may be made of any type of feasible materials known to those in the field. The toy figure 1 has at least one movable portion for providing animation effect. It is preferred that said movable portion of the toy figure 1 be its mouth or the like for simulating the voicing, talking or sounding of a living being, although other body portion of the toy figure 1 may also be animated.

The multimedia computer system 30 for may be of any type of market-available conventional multimedia home computer. Apparently, the computer system 30 may also be of any other type of digital computing devices with multimedia / audio capability, such as an Internet- or Web-TV 900 (FIG. 1) or the like or an electronic video game console/device or the like or other computer system configurations. The transmitting means for connecting the toy figure 1 to the computer may be a connection cable, as shown in the drawing, or the like, or it may be, preferably, wireless or remote transmitting devices installed in both the computer 30 and the toy figure 1's body.

One skilled in the art would understand that, the "body" of the toy figure 1 may take any of the usual form and construction of a physical entertainment figure, and may include element(s) for representing or simulating any body part(s) of a living being or the like. In the examples of FIGS. 1-4, the toy figure 1's "body" (i.e. major body parts) is characterized by a torso portion 3 and a head member 2 mounted thereon; The toy figure 1' body shown in the drawings also includes a pair of legs 5 for supporting said torso portion 3; Attached to the two sides of the torso portion 3 are a pair of arms 4, each comprising an upper arm 24 and a forearm 26; The head member 2 includes a mouth portion 12 and a pair of eyes 20; The entire toy figure 1's body may be mounted onto and being removable from a base member 54.

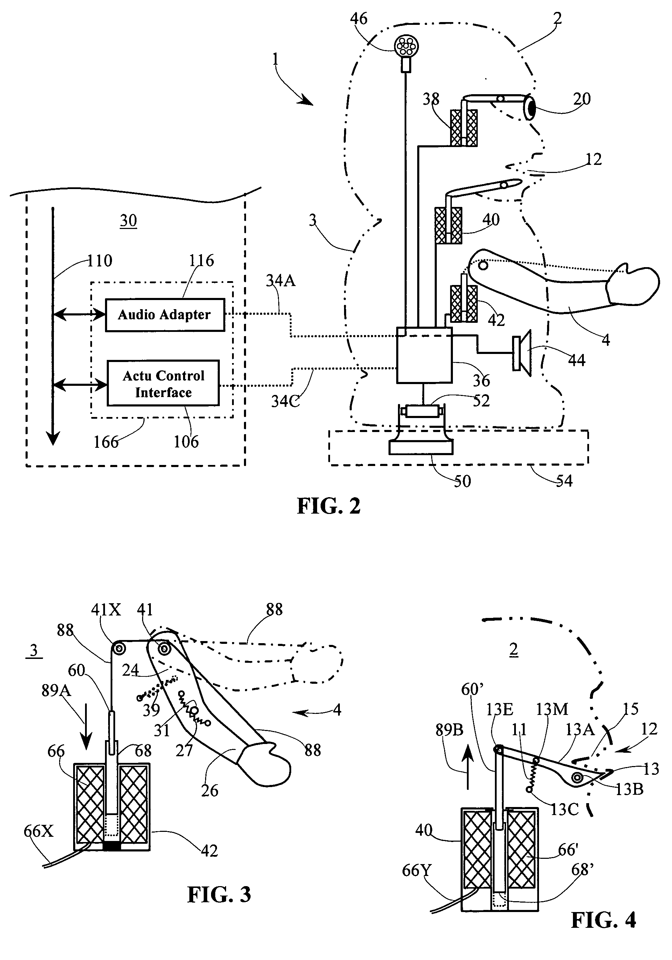

It is appreciated that the animation effect of the toy figure 1 is provided, preferably, by movement of its mouth portion 12 for simulating sounding or talking behavior or the like of a living being. The toy figure 1 may be configured for digital control of movement of its other body portions, such as the two arms 4, the two eyes 20, or the entire head member 2, etc. In one example, the arm 4 may move relative to the torso portion 3, and/or may bend at a pivotal juncture 31 between its upper arm 24 and forearm 26 (FIG.3). More than one body part of the toy figure 1 may be set to move at the same time.

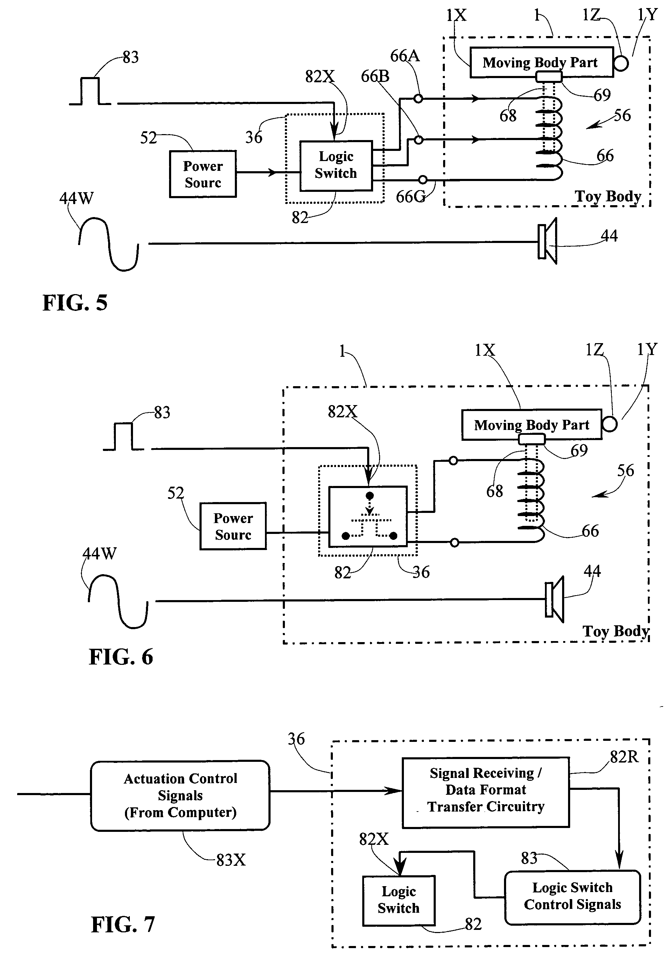

In FIG. 2 is illustrated the toy figure 1's interior structure in which includes an "audio output means" 44, such as a loudspeaker or the like, mounted at an appropriate position inside the toy's body, for providing audio output, an "actuation device" 40 disposed at an appropriate position inside the toy's torso 3 and/or head portion 2 for providing actuation means for the toy's movable part of the mouth 12, an "actuation control circuitry" 36 for controlling the actuation device 40 according to the "actuation control signals" received from the computer 30, and a "power supply means" 52 for providing electric power for the actuation control circuitry 36 and the actuation device 40. The combination of the actuation device(s) 40, the actuation control circuitry 36, and the power supply means 52 may be regarded collectively as the "actuation system" of the toy figure 1. The interior of the toy figure 1 may also include an "audio input means" 46, such as a microphone, for receiving and transmitting external sound received by the toy figure 1 to the computer 30. It is understood that, said audio input means 46 and/or audio output means 44 may be, preferably, mounted inside the head 2 or torso portion 3 of the toy figure 1 (FIG. 6); and that, alternatively, the member(s) 44 and/or 46 may be placed at an appropriate position outside the toy figure 1's body (FIG. 5). Also alternatively, the entire actuation control circuitry 36 may be placed at an appropriate position outside toy figure 1's body, as shown in FIG. 5, and connected to the toy figure 1 via a suitable connection means.

Should it be desired that other body part of the toy figure 1 be movable for providing animation effect, more actuation devices shall be provided, and the actuation control circuitry 36 shall be modified accordingly. For example, as shown in FIG. 2, additional actuation devices 38 and 42 are provided for moving, respectively, an eye 20 and an arm 4 of the toy figure 1. It is preferred that the actuation devices 40, 38 and 42 are two-state or multi-state actuation devices, such as solenoids.

It is appreciated that the actuation devices 38, 40, and 42 and the actuation control circuitry 36 of the toy figure 1 are feasible for digital control and multimedia synchronization by the computer 30. It is preferred that the devices 38, 40, and 42 are of two-state or multi-phase type electromagnetic actuation device such as a solenoid. One skilled in the art would understand that, there exists various type of commonly used solenoid that can be employed in the present invention, such, for examples, as DC (or AC) type solenoid or the like, rotary type solenoid or the like, and push or pull type solenoid or the like, etc.; and that, multi-coil type solenoid may also be used. Different type of solenoid may be used for simplifying the mechanical structure of the toy figure 1's interior. For examples, in FIGS. 3-4, a pull-type solenoid 42 and a push-type solenoid 40 are illustrated, respectively, for actuating the toy figure 1's arm 4 and mouth 12; It may be more convenient to use a rotary solenoid to control the actuation of the moveable portions of the toy figure 1's eye 20; etc. Other types of rotary driving devices known to those in the art may also be used for implementing the digital synchronization methods of the present invention, such, for example, as stepper motors, which may require more complex gearing and control systems and actuation control circuitry compared with the examples described herein.

Reference is now made to FIGS. 5-6, wherein all the solenoids (e.g., the solenoids 38, 40, 42, etc.) of FIGS. 2-4 for actuating the toy figure 1's various body parts are designated generally with reference number 56; the "movable body part" of the toy figure 1 of FIGS. 1-4 is designated generally with reference number 1X; the "body-part attachment means" for attaching said toy figure 1's movable body part 1x to its nearby stationary portion is designated generally with the reference number 1Z; said "nearby stationary portion" is designated generally with the reference number 1Y. The solenoid 56 includes coil winding(s) 66 and a magnetic plunger 68. The "plunger coupling means" for coupling the movable body part 1x of the toy figure 1 to the plunger 68 is designated generally with reference number 69; and the "actuation control circuitry" for providing actuation control for the solenoid 56 is designated generally with reference number 36 (see also FIG. 2). It is understood the term "magnetic plunger" 68, as used herein, represents generally a solenoid's movable magnetic element or the like and any of its extension or shaft or the like; For examples: (i) in case of FIGS. 3-4, the term "magnetic plunger" 68 represents a plunger element 68' therein and its upper extension or shaft 60'; (ii) in case of a rotary solenoid, term "magnetic plunger" 68 represents the magnetic armature thereof or the like, including its extension shaft or the like. According to the present invention, the operation principle of the "actuation control circuitry" 36 shall be understood as a logic switch: the circuitry 36 includes a logic switch circuitry 82 that is to be controlled by a digital "logic switch control signal" 83. The signal 83 may be transmitted, preferably, from the computer 30 or, alternatively, from other type of digital devices, or from a remote computer via the Internet. The logic switch 82 includes a logic input point (or lead or the like) 82x for receiving digital or logic control signals. The function of the logic switch 82 is to control electric power supply for the solenoid coil(s) 66 according to the digital logic switch control signal 83 received at its logic input point 82X. For examples, the logic switch 82 may connect the solenoid coil 66 to the electric power source 52 with little or no resistance in response to receiving a binary or logic signal (e.g. the "1") at its logic input point 82X, and disconnect the coil 66 from the electric power source 52 or act as a very large resistance there-between in response to receiving the other binary logic signal (i.e., the "0") at its logic input point 82X.

The operation principle of the actuation control circuitry 36 or the logic switch 82 may also be understood as that, it provides two different types of basic electronic or electrical functions (i.e. "switching") with respect to transmitting electric power or current from the power source 52 to the coil(s) 66 of the solenoid 56 in response to receiving the two different digital or binary signals. One skilled in the art would understand that, (i) many methods and electronic circuitries might be used for implementing such two-phase "switching" functionality; For example, the actuation control circuitry 36 may, alternatively, include means or electronic elements for changing direction of electric current passing through the coil 66 in response to receiving the two different binary digital signals, i.e., "1" and "0"; and that, (ii) the logic switch 82 may be a complex circuitry, or it may be comprised of just a single electronic device; For examples, the logic switch 82 may be a Field-Effect Transistor (FET) or an Analog Transmission Gate or the like, or it may be of other type of digital transmission-control devices known to those in the art;

It is appreciated that, since all solenoid 56 has two states, i.e., energized and de-energized states, the actuation of the solenoid 56 can be directly associated with or controlled by the two binary codes or signals "1" and "0" of the digital "logic switch control signal" 83. Referring now to FIG. 7, the actuation control signal 83x shown is the external signal received by the toy figure 1, which may be transmitted from the computer 30 or from a remote computer via a network; The "logic switch control signal" 83 shown is the desired logic or binary signal directly associated with the aforementioned two states of the solenoid 56 and the two states of the toy figure 1's movable body part (e.g., "open" and "close" of the mouth 12). The "logic switch control signal" 83 is to be received at the logic input point 82X of the logic switch 82. Those skilled in the art would understand that the external "actuation control signal" 83X received by the toy figure 1 might not be the same as said "logic switch control signal" 83. For examples, the signals 83x might be in different data format, or transmitted to the toy figure 1 via a network through a standard data-transfer protocol or the like; or the signals 83x might be wireless signals, etc. Thus, a signal receiving and data format transfer system 82R might need to be included in the actuation control circuitry 36, as shown in FIG. 7.

One skilled in the art would also understand that other well-known electronic elements or devices or system can be added to the actuation control circuitry 36 to provide the actuation system with more sophisticated and elaborate features. For examples, devices such as capacitor, Zener, and diode may be included in the circuitry 36 to improve the response speed of the solenoid 56 and/or to suppress arcing from the coil 66; if necessary, appropriate digital devices may be included in the circuitry 36 to transfer external digital signals 83x received by the toy figure 1 to the desired "logic switch control" signals 83 for controlling the logic switch 82; and, the actuation control circuitry 36 may also be designed for controlling more than one solenoids, or for controlling a solenoid having more than one coils; etc. It is well known that a solenoid may have more than one coils, and that a solenoid coil may have one or more lead at an appropriate intermediate position along the wiring coil, etc. Such alternative solenoid coil configurations are shown in FIG. 5. As shown therein, the solenoid 56's coil 66 includes three leads: 66A, 66B, and 66G, which may be understood as that, (i) the coil 66 comprises two coils, i.e., coil 66A-66G and coil 66B-66G; or that (ii) the coil 66 includes a lead 66B at an intermediate position along the coil wiring 66A-66G. Accordingly, the circuitry 36 may be adapted for controlling which coil or which portion of the solenoid wiring 66 shall be provided with electric current according to the desired movement range of magnetic plunger 68. For example, the logic switch system 82 of the circuitry 36 may include two separate logic switch devices or circuitries for controlling the current flows along the connections 66A-66G and 66B-66G respectively.

It is appreciated that, because of the two-phase or two-state nature of a solenoid (i.e., "energized" and "de-energized") and the two-phase or two-state nature of the toy figure 1's movable body part 1X (e.g., "open" and "close"; OR, "up" and "down"; etc.), there is a direct correspondence among the binary codes "1" / "0", the two states of the plunger member 68 of the solenoid 56, and the two states of the toy figure 1's movable body part 1X. Thus, the coupling means 69 does not require any type of complex rotary gearing system, and each independent movable part of the toy figure 1 may be provided with one solenoid. In regarding the body-part attachment means 1Z, it is preferred that the movable body part 1X of toy figure 1 be pivotally attached to or engaged with its nearby stationary portion 1Y, having a return spring attached thereto for urging said movable body part 1X to its default or neutral position when the respective actuation device 56 is de-energized. Such arrangements are exemplified in FIGS. 3-4.

The control of actuation of the toy figure 1's movable body part 1X in synchronization other multimedia components is provided by the computer 30. The computer 30 is preferably a standard multimedia personal computer such as a standard IBM compatible PC or a Macintosh or the like, or it may be a Network Computer (NC), an Internet TV, or a mainframe or workstation computer, etc., or it may be of any other type of computing devices installed with multimedia systems. Alternatively, said synchronization may be provided by a remote network computer. The computer 30 has the basic functions of a conventional computer such as data processing, data storage, data movement, and operating control means, etc.

It is appreciated that, the present invention provides various ways of using the computer 30 to synchronize the animation of the toy figure 1 with its audio output. Such synchronization is realized by transmitting to the toy figure 1, concurrently and separately, the audio playback sound signals 44W (FIGS.5-6) and a properly timed sequence of actuation control signal 83x in a coordinated manner; the total time of the control signal sequence 83 and the timing unit of each of its element are properly determined based on the desired audio output speed of the toy figure 1. It is appreciated that, because the actuation control signals 83x is separate from the sound signal 44W, the synchronization methods of the present invention may be applied to provide realistic sound-animation synchronization for the toy figure 1 even if its sound does not include human speech, such as a musical or noise type sound without lyric or a background sound, etc., or even if the movable body part 1x of the toy figure 1 is not its mouth portion 12.

The "logic switch control" signal sequence 83 is comprised of a sequence of "binary elements", which may be created according to detailed text content and the timing control of the toy figure 1's audio playback, and it may be converted to a pre-defined data or signal format for transmission (e.g., the signal 83X described above). For examples, (i) the signal sequence 83 may be created in such a way that each of its element and the timing thereof is directly associated with the arrangement of vowel letters in the text of the toy's speech; the computer 30 may create logic switch control signals 83 for use to direct the toy figure 1 to open its mouth once on every or every other utterance of a vowel letter in the text of the toy figure 1's current speech; (ii) the animation of the toy's other body part may be controlled based on the appearance of certain predefined words or phrases in said speech; etc.

The general rules for creating the logic switch control signal 83, according to the present invention, may be summarized as follows: (i) the number of parallel data / signal sequences (or number of rows) of the "logic switch control" signal 83 for direct control of the respective actuation device or solenoid of the toy figure 1 shall be made equal to the number of solenoid within the toy figure 1, if every solenoid so employed includes only one coil; For examples, if only the mouth 12 of the toy figure 1 needs to be animated, and solenoid 40 (FIGS. 2, 4) includes only one coil, the signal sequence 83 will be one dimensional for controlling the solenoid 40 only; if the animation of the mouth 12 and the eye 20 is desired, then two one-coil solenoid 40 and 38 are needed, and hence, the logic switch control signal sequence 83 will comprises two parallel rows or sequences, etc.; (ii) The length or number of "binary element" of each continuous logic switch control signal sequence 83 is determined based on the total number of characters, symbols, and null spaces of a continuous audio speech sequence of the toy figure 1; (iii) Each one of said "binary element" within the signal sequence 83 is assigned with either "1" or "0", depending on the respective character or letter in the associated speech text and based on a pre-defined rule relating to the arrangement of the characters or letters or alphabets in the text of the toy figure 1's speech ; (iv) The timing unit for each said "binary element" is obtained by dividing the total time of said continuous audio speech sequence by total number of binary elements of said logic switch control signal sequence 83. Alternatively, the binary value of each element of the logic switch control signal sequence 83 may be assigned according to the relative loudness of the sounding of each word of toy figure 1's speech.

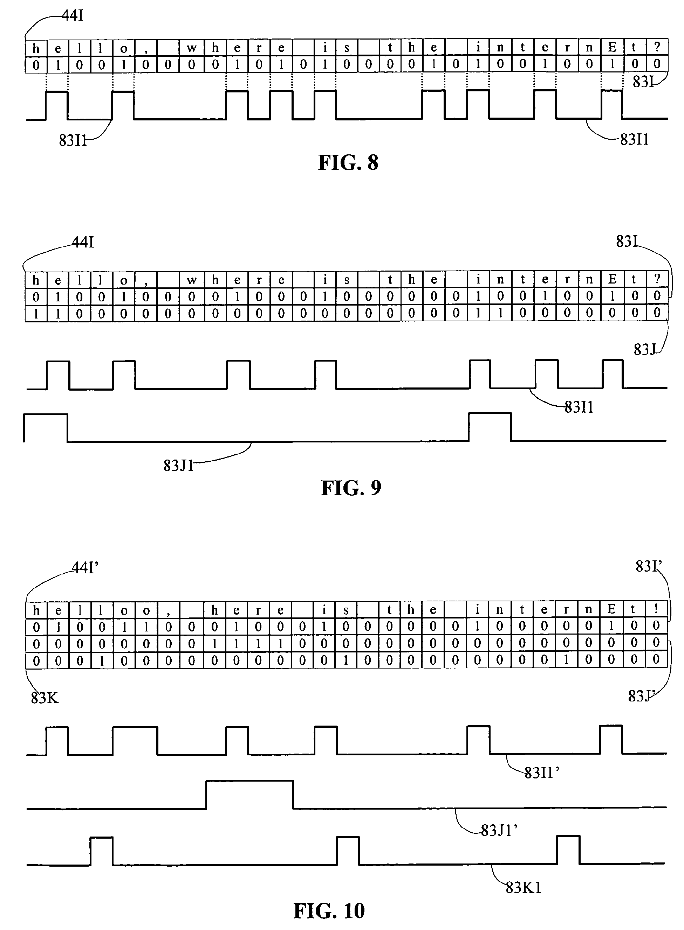

Thus, the binary codes "1" and "0" is directly associated with the "energized" and "de-energized" states of the solenoid 56, and with the "open" and "close" conditions or the like of the toy figure 1's mouth 12 or its other movable body part 1X. The code "1" represents the action of energizing the respective solenoid 56 for moving the respective movable body part 1X of the toy figure 1 by sending the signal or data "1" to the logic input point 82x of the logic switch 82; The code "0" represents de-energizing the respective solenoid 56 for returning the respective movable body part 1x of the toy figure 1 to its default or neutral position by sending the signal or data "0" to the logic input point 82x of the logic switch 82. Because the solenoid 56 has a finite response time, the rules for creating the logic switch control signals 83 may also be dependent on how fast the speech is to be spoken by the toy figure 1 compared with said response time. According to another aspect of the present invention, certain of the toy's body parts, such as the arm 4, the entire head member 2, etc., may be set to move randomly or based on whether the current word or phrase of the toy figure 1's audio speech belongs to a predefined vocabulary groups. The principle of creating or sequencing the "binary elements" of the logic switch control signal 83 is exemplified by, but not limited to, the three cases shown in FIGS. 8-10, wherein the text 44I[I'] of toy figure 1's sample speech 44w is "hello(o), [w]here is the internet?"; and there are 29 alphabetic or binary elements or digital codes in each of the three examples.

In the example of FIG. 8, it is assumed that only the mouth 12 of the toy figure 1 is set to move, and the speed of the audio speech is slow. Accordingly, the logic switch control data 83I and signal sequence 83I1 are one-dimensional with 29 "binary elements" for controlling the one-coil solenoid 40. The binary code/signal sequence 83I/83I1 is created by, (i) assigning the code "1" to each said binary element that is associated with a vowel letter in the text 44I; otherwise, (ii) assigning the code "0" to each said binary element that is associated with a non-vowel letter / character or null space in the text 44I.

In the example of FIG. 9, it is assumed that the movable body parts 1X of the toy figure 1 include the mouth 12 and the arm 4, and the speed of the toy's audio speech is fast. Accordingly, the logic switch control data/signal 83 includes two parallel sequences: the first one 83I/83I1 are provided for controlling the mouth 12, and the second one 83J/83J1 are provided for control of the arm 4; and the rule of the FIG. 8 example for creating the data/signal sequence 83I/83I1 is modified by imposing thereon a constraint, i.e., any two "1"s therein should be separated by at least two "0"s unless such two "1"s are next to each other, otherwise, the second "1" shall be changed to "0". The second logic switch control data/signal sequence 83J/83J1 for controlling the arm 4 is created by randomly assigning the binary code "1" to each binary element therein, provided that the total number of "1"s in the data sequence 83J is less then 30% of the total number of the binary element therein.

In the example of FIG. 10, the movable body parts 1x of the toy figure 1 include the mouth 12 and the arm 4, provided that, the solenoid 42 employed for actuating the arm 4 (FIGS 2-3) is assumed to have two coils (e.g., coils 66A-66G and 66B-66G of FIG. 5). Thus, the logic switch control data/signal 83 includes three parallel sequences: the first one 83I'/83I' 1 are provided for controlling the mouth 12; the second one 83J'/83J' 1 are provided for controlling the first coil of the solenoid 42, and the third one 83K/83K1 are provided for controlling the second coil of the solenoid 42. The first data/signal sequence 83I'/83I' 1 is an improvement of that of the FIG. 9 example by imposing thereon a constraint, i.e., any word in the text 44I may only contain no more than twice the switching of "from 0 to 1", otherwise, one of the "1"s therein shall be changed to "0". In creating the second data/signal sequence 83J'/83J'1, there is provided a predefined group of words including "yes", "good", "great", "here", etc.; If any word in such vocabulary group appears, such as the word "here" in the present example, every binary element in association with the word "here" is assigned with the code "1", otherwise, the code "0" is assigned. The third logic switch control data/signal sequence 83K783K1 is created by randomly assigning the binary code "1" to each binary element therein, provided that no "1"s will be assigned if the corresponding or associated element in the second data sequence 83J' is also a "1".

Those skilled in the art will understand that, (i) the "actuation control signal" 83X transmitted to the toy figure 1 from the computer 30 may be the same as or different from the above-described "logic switch control signal" 83 desired to be transmitted to the logic input point 82X of the logic switch 82; (ii) actual data file for sound and actuation control of the toy figure 1 may be in a compressed or other standard or conventional data format; (iii) the binary data sequences 83I-K of the FIGS. 8-10 examples may well be different from the actual binary "machine code" created by or for a computing device; (iv) the timing unit of each binary element of the exemplary binary data sequences 83I-K is not intended for relating to the clock speed of a digital computing device; (v) each "1" or "0" in the FIGS. 8-10 examples may represent a continuous sequence of "1"s or "0"s respectively in an actual binary "machine code" sequence; (vi) the toy figure 1's sound signal 44W and actuation control signal 83/83x may be synchronously transmitted from two separate synchronized sources; (vii) each binary element of the logic switch control signal 83 may also be related to the relative loudness of the sounding of each word of the toy figure 1's speech; and, (viii) the actuation control signal 83X or 83 may also be prerecorded in synchronous combination with the respective sound signal sequence 44w for serving as synchronized source files or data.

According to another aspect of the present invention, the sound and animation of the toy figure 1 are digitally controlled and are synchronized with the audio / video contents of an associated streaming video transmitted from the Web site 300 to the computer 30; The computer 30 is provided with resolution amplification means so as to facilitate instant large-screen and high-resolution display of a "small-frame" streaming video transmitted through the Internet.

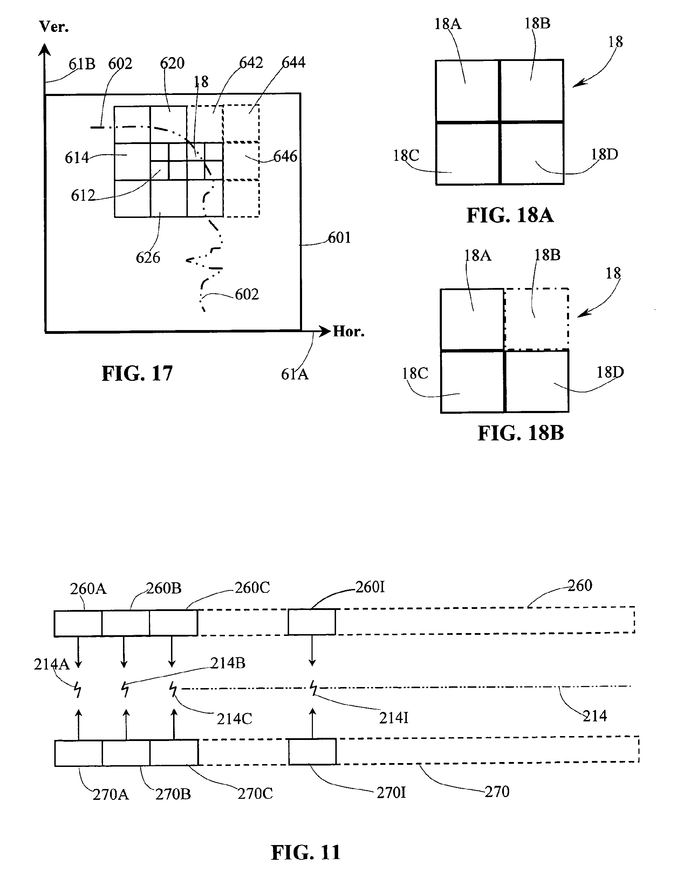

Reference is now made to FIGS. 17-19 in conjunction with FIGS. 1. In FIG. 17, an image frame of a digital streaming video transmitted from the web site 300 to a client computer 30 (see FIG. 1) is designated generally with reference number 601; an image edge within the image frame 601 is designated generally with reference number 602 for representing that there exist substantial color-character differences between those pixels at the two sides of the image edge 602. The pixels at the upper-right side of the image edge 602 includes pixels 642, 644, and 646, etc.; The pixels at the lower-left side of the image edge 602 includes pixels 612, 614, and 626, etc.; A pixel 18 is for representing generally those pixels lying across the image edge 602. The image frame 601 includes a horizontal axis 61A and a vertical axis 61B.

According to the present invention, the image within the frame 601 is enhanced by a process including: (i) resolution amplification, i.e., artificially increasing the number of column and row of pixels of the image frame 1, and thereafter, (ii) color adjustment, i.e., determining color characters 61Y (FIGS. 19), such, for examples, as the color, color frequency or wavelength, or percentage of red, green and blue, contrast, brightness, saturation, hue, or luminescence, etc., of each new pixel or cell created by said resolution amplification process according to that of the original neighboring pixels or cells thereof, and (iii) image edge sharpening, i.e., smoothing the image edge of the newly amplified or color-enhanced image within the frame 601 by adjusting the color characters of those pixels lying across the image edge 602, such as the pixel 18 of FIG. 17. These processing steps of resolution amplification, color adjustment, and image edge sharpening are executed by the client computer 30 of FIGS. 1.

In FIGS. 17-18, the above-described resolution amplification process is exemplified by dividing each original pixel within the frame 601 into four child pixels or cells of the same sizes. For examples, the original pixel 18 is divided into four child pixels or cells of the same sizes, including pixels 18A (upper-left), 18B (upper-right), 18C (lower-left) and 18D (lower-right); and the original parent pixel 612 is divided into four child pixels or cells of the same sizes, i.e., upper-left 612A, upper-right 612B, lower-left 612C, and lower-right 612D (these four reference numbers are not shown in the drawings), etc. Similarly, every other pixel within the frame 601, designated generally by the reference number X, may be divided into four child pixels or cells of the same sizes (i.e., upper-left XA, upper-right XB, lower-left XC, and lower-right XD). Consequently, the resolution of the image frame 601, i.e., total number of pixel columns and rows therein, is four times the original.

With respect to the aforementioned color adjustment process, i.e., the process of determining the color characters of the newly created or amplified pixels cells based on those of the original neighboring pixels or cells thereof, FIGS. 17-19 show an exemplary process of obtaining the color characters 61Y of the four newly added or amplified child cells or pixels 612A, 612B, 612C, and 612D that form the original parent pixel 612. As shown therein, the original pixels 614, 18, 646, and 648, etc. share the same row within the frame 601 as the original pixel 612; and the original pixels 626, 620, and 621 etc. share the same row within the frame 601 as the parent pixel 612. As shown in FIG. 19A for the horizontal direction 61A of FIG. 17, there is a substantial difference between the color characters 61Y of the two original neighboring pixels 18 and 646 in comparison to the color character differences between other original neighboring pixels, such as between the pixels 646 and 648, or between the pixels 612 and 18, etc. Thus, it determined that the two original pixels 612 and 646 are situated at two different sides of an image edge (e.g. the image edge 602 of FIG. 17). Similarly, in FIG. 19B for the vertical direction 61B, there is a substantial difference between the color characters 61Y' of the two original neighboring pixels 620 and 621 in comparison to the color character differences between other original neighboring pixels, such as between pixels 612 and 620, etc. Thus, it is determined that the two original pixels 612 and 621 are situated at two different sides of an image edge.

As described above, the color characters of the four newly added child cells or pixels 612A, 612B, 612C, and 612D that form the original pixel 612 are determined according to those of the original neighboring pixels or cells thereof. The present example of FIGS. 17-19 adopts the following rules during the color adjustment process: (1) the color character value of the upper-right child pixel 612B remains the same as that of the original pixel 612; (2) the color character value Y1 of the upper-left child pixel 612A is determined according to those original neighboring pixels that share the same row as the pixel 612; (3) the color character value Y2 of the lower-right child pixel 612D is determined according to those original neighboring pixels that share the same column as the pixel 612; (4) the color character value of the lower-left child pixel 612C is made equal to the average of those of the upper-left child pixel 612A and the lower-right child pixel 12D (i.e., the average of Y1 and Y2). In FIG. 19A, since the original pixels 612 and 646 are situated at two different sides of an image edge, the pixels 646, 648, etc. will not be used for determining the color character value Y1 of the upper-left child pixel 612A. Similarly, in FIG. 19B, since original pixels 612 and 621 are situated at two different sides of an image edge, the pixels 621, 623, etc. will not be used for determining the color character value Y2 of the lower-right child pixel 612D.

As shown in FIG. 19A, a math function F(X) is obtained based on three reference points in the coordinate system of "61Y v.s. 61A", including the color character values 61Y of the original pixels 612, 614, and 18 and the respective horizontal positions of the upper-right comers of these pixels within the frame 601. Similarly, in FIG. 19B, a math function F'(X) is obtained based on three reference points in the coordinate system of "61Y' v.s. 61B", including the color character values of the original pixels 626, 612, and 620 and the respective vertical positions of the upper-right corners of these pixels within the frame 601. The color character value Y1 of the upper-left child pixel 612A is obtained using the function F(X) and the horizontal position x612A of the center of the pixel 612 within the frame 601, i.e., Y1 = F (X=x612A); the color character value Y2 of the lower-right child pixel 612D, is obtained using the function F'(X) and the vertical position y612D of the center of the pixel 612 within the frame 601, i.e., Y2=F'(X=y612D).

One skilled in the art would understand that, (i) the number of reference points utilized for obtaining the math functions F(X) and F'(X), or the number original neighboring pixels used for determining the color character values Y1 and Y2 of the upper-left child pixel 612A and the lower-right child pixel 612D respectively, may be dependent on the computing power of the client computer 30; (ii) the math functions F(X) and F'(X) may be in any math form, such as a straight line or a polynomial or the like or in other type of math formula form; (iii) the number of parameters in the math functions F(X) and F'(X) may be dependent on the aforementioned number of reference points utilized for obtaining such math functions; and (iv) the client computer 30 may perform multiple cycles of resolution amplification and color adjustment processes as described. For example, in a second stage resolution amplification process, the child pixel 612A (or 18A) can be further divided into four "grandchild" pixels, and the color characters of said grandchild pixels can be obtained using the methods described above. But it is preferred that the image edge sharpening process described in the ensuing sections be executed before performing said second stage resolution amplification process.

With reference to FIGS. 18 in conjunction with FIG. 17, as described above, the original pixel or cell 18 lies across the image edge 602, i.e., lower-left corner of the pixel 18 is situated at one side (lower-left side) of the image edge 602, and the upper-right corner of the pixel 18 is situated at the other side (upper-right side) of the image edge 602. The above-described resolution amplification and color adjustment processes divide the pixel 18 into four child pixels, i.e., child pixels 18A, 18B, 18C, and 18D, with the color character values of these child pixels being determined according to those original pixels at the lower-left side of the image edge 602. During the edge sharpening process, it is determined that at least two sides of the child pixel 18B are completely "exposed" to those original or child pixels that belong to the upper-right side of the image edge 602. Thus, the child pixel 18b is converted to belonging to the upper-right side of the image edge 602 by, for example, assigning its color character value 61Y to the average values of the three neighboring pixels 642, 644, and 646 at the upper-right side of the image edge 602. As shown, the four edges of the child pixel 18a is "converted" from solid lines of FIG. 18A to dashed lines of FIG. 18B.

The above-described edge sharpening method by evaluating the "exposure" of the four edges of a child pixel to the other side of an image edge may be applied to the upper-right child pixel 18B first before being applied other child pixels. Thereafter, in evaluating the child pixel 18A, it is determined that more than two sides thereof are "exposed" to those original or child pixels that belong to the lower-left side of the image edge 602. Consequently, the color character of the child pixel 18A remains unchanged during the current edge sharpening process. Similarly, the color character of the child pixels 18C and 18D also remain unchanged.

Thus, after performing the foregoing processing cycle of resolution amplification, color adjustment and image-edge sharpening by the client computer 30, the color resolution of image frame 601 is doubled, and the image edge within the frame 601 is sharpened since those pixels lying across the image edge 602 are smaller. One skilled in the art would understand that such a processing cycle can be performed many times by the client computer 30, depending on its processing power or speed, so as to provide the image frames with much better resolution. As a result thereof, the digital streaming video to be displayed on the computer 30's monitor or on the TV set 900 can have much larger image frame with the same or similar image quality as that of the original small image-frame video. With respect to the standard encoding / decoding and data compression processes for transmitting streaming video, such a processing cycle of resolution amplification, color adjustment and image edge sharpening may be performed before or after the decoding process by the client computer 30.

Reference is now made to FIGS. 12-16 in conjunction with FIG. 1. The control of the multimedia system of FIG. 1 is provided by a hand-held remote control device 710, which includes computer and Internet / web browser operation buttons and scrolling means (as described below), a conventional number/letter button assembly 720 for TV-channel selection, TV-channel changing buttons 72U and 72D for increasing and decreasing the current TV channel number respectively, a TV channel return button 72R, and the conventional volume control buttons 71B and a mute button 71M. Alternatively, a conventional VCR-, CD-, or DVD-type media-player operation assembly 770 that includes "play", "fast forward", "fast reverse", "pause", and "stop" buttons, etc. may also be included.

It is understood that, the foregoing "conventional" TV control buttons are provided for interacting with all components of the multimedia system of FIG. 1, and that, some of said "conventional" TV control buttons may also be used for computer operations. For examples, (1) In addition to the function of conventional TV channel selection, the number/letter buttons 720 may also be used to access a computer application program, as described in details herein below; (2) The channel return button 72R may be used for controlling the currently active computer-TV window by switching the display content therein back to the previously viewed TV channel, etc. The remote control 710 may, optionally, includes a device-selection button 71A, for selecting which device (e.g., the TV, VCR, DVD, the toy figure 1, or the Computer system 30, etc.) is to be currently controlled by the remote control 710.

It is appreciated that, the basic concepts of remote control of the present invention include, (i) a simple remote control operation will instruct an active window to display a listing of application buttons or links (e.g., a toolbar, a bookmark listing, etc.), and in the meantime, restrict the cursor within the display area of such listing so as to facilitate the user's desired action of easily browsing through and clicking on one of the application buttons or links so listed; (ii) a limited number of press button combinations of the remote control 710 will provide unlimited shortcut means for easy access to the user's desired applications or commands; and (iii) "Indirect Control" method is applied when using the remote control 710 for a general-purpose remote control of other devices; For example, in FIG. 1, the computer 30 is provided with means for generating remote-control signal and associated software system, so as to simulate the functioning of a general-purpose handheld remote control device; if the remote control 710 is to be "adjusted" to control the devices 702 or 706, rather than adjusting the device 710 itself, such an "adjustment" is made to the respective software application of the computer 30 such that, the desired (or adjusted) remote control signals 74B / 74A be transmitted from the computer 30 to the device 702 / 706 respectively in response to the user operation of the remote control 710, while the control signals transmitted from the remote control 710 to the computer 30 are not "adjusted" (thus "Indirect Control").

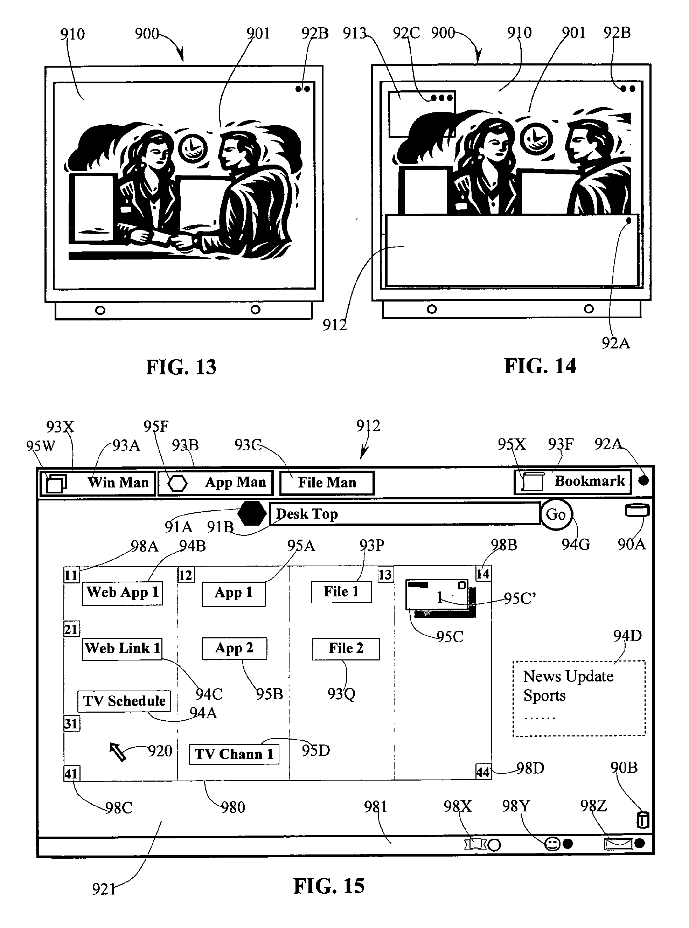

It is preferred that, the remote control 710 includes a display buttons 71Q for display control, such, for examples, as opening / closing a new window on the display device 900 or pulling down or expanding a menu (see below), by interacting with the Computer operation system 30 of FIG. 1 via wireless signals, and that, TV channel selection is the default function provided by the number buttons of the assembly 720. For examples, (i) in order to display TV channel 7 within a new TV-window 913 (window No. 3) (see FIGS. 13-14), a user will depress the display button 71Q and then the number button "3" for opening a new window 913 on the display 900, then the user can press the number button "7" for displaying the TV channel 7 within the TV-window 913; (ii) if the user presses the number button "3" without depressing the 71 q button or any other functional button therebefore, the current active window will be switched to TV channel No. 3.

It is preferred that each said TV-window is provided with a simple window ID so as to facilitate user control. For example, as shown in FIG. 14, the TV-windows 913, 912, and 910 are provided with an ID 92C (three dots), ID 92A (one dot), and 92B (two dots) for indicating that they are window No. 3, 1, and 2 respectively. Such window IDs 92A, 92B, and 92C may also service the purpose of indicating the current "active" window, i.e., the TV-window that is currently controlled by the remote control 710, by, for example, highlighting or brightening the ID of the active window. Apparently, other methods, such for example as highlighting the frame of a Window, may be used for indicating the current active window.

Alternatively, two or more remote control devices may be provided for control of different windows on the same display 900 and controlled by the same computer system 30 of FIG. 1, in which case the computer and the remote control devices may be provided with device-identification systems such that a window opened by one remote control device will not response to control signals transmitted from other remote control device(s).

A cancel or close button may be provided on the remote control 710 such that, the combination of depressing the display button 71q and then the cancel / close button will close the current active window. For example, if the current active window is the TV-window 913 and the user wants to close the TV-window 912 (window ID No. 1), the user will first switch from the TV-window 913 to the TV-window 912 by pressing the "Disp" button 71q and the "1" button, then the user can close the TV-window 912 by the combination of depressing the "Disp" button 71q and then the cancel button. The TV signals 270 transmitted from the broadcast center 208 may include display instructions with respect to how many TV-windows are desired for a current TV program 901, and/or the default size, position, and content of each TV-window. A web page or web content associated and/or in synchronization with the current TV program and displayed in a separate window may provide sub-content information (e.g., different camera angle for a sport event) and application link therefore such that "clicking through" such application link using the remote control 710 will cause the respective sub-content in connection with the current TV program be displayed within a newly generated Windows.

It is preferred that TV-computer operation system 30 of FIG. 1 is a web-browser based operation system, i.e., the full functionality of a conventional web browser is integrated or incorporated into the basic functionality of said TV-computer operation system 30. Accordingly, the remote control 710 is provided with short-cut press buttons for interacting with the web-browser functions of the TV-computer operation system 30.

It is preferred that the remote control 710 includes a "bookmark" button 73X for adding a web page(s) into the bookmark list (or the like) of the computer system 30's web browser. It is preferred that, (i) if the current active Window only displays a TV program 901, depressing the "bookmark" button 73X will cause the web browser to bookmark the default or synchronized Web page associated with the current TV program 901, regardless of whether such web page is displayed within a window; and that (ii) if the current active window(s) shown on the TV set 900 displays a web page(s), depressing the "bookmark" button 73X will cause the web browser to bookmark said web page(s) shown.

It is also preferred that, the remote control 710 may further includes a "buy" button 73B for facilitating online purchasing by activating an online identity-authentication /purchasing application installed in the computer 30. For examples, if a web page shown on the display 900 include a "purchase" item available for online purchasing, when a user press the "buy" button 73b to activate said online identity-authentication / purchasing application, the associated confirmation information, such as the price, name, shipping address, credit card account information, etc., and simple instructions will be displayed on the display 900 within a designated window; the user can then press the "buy" button 73b again or a "go" button 74g (see below) on the remote control 710 to complete the transaction; Apparently, the system may request that the user provide password using, for example, the number buttons 720 of the remote control 710 before the purchasing process is completed.

The web page or content associated or synchronized with the current TV program and provided by the respective web site may also include TV-display instruction for instructing the TV-computer system 30 as to the desired size, position, and background color, etc. of the TV-window designated for displaying the web page.

The remote control 710 also includes a "Go" button 74G for interacting with the designated application, a "cursor float" control button 74F for controlling the "floating status" of the cursor 920, and a cursor control assembly 740. As shown, the assembly 740 includes a vertical rolling wheel 74v and a pair of horizontal rolling wheels 74r and 741. The vertical rolling wheel 74v is provided for controlling continuous vertical-only scrolling or cursor movement on the TV display 900; the two horizontal rolling wheels 74r and 741 are provided for controlling continuous horizontal-only scrolling or cursor movement. The cursor 920 is provided with at lease two modes, including a "floating mode" and a "local mode"; pressing the button 74F will cause the cursor 920 to switch between said at lease two modes. (1) If the cursor 920 is in said floating mode, a user may cause the cursor 920 to move freely and continuously throughout the entire display area of the TV set 900 by operating the rolling wheels 74v, 741 and 74r; in this case, the cursor 920 is not restricted within a specific Window or application area; (2) Depressing the cursor float button 74f will cause the cursor 920 to switch from said floating mode to said local mode such that the cursor will provide scrolling function for the respective local window application area.

It is preferred that while in local mode, the cursor 920 provides two functions, (1) if the respective local application area is not fully displayed, operating the rolling wheels 74v, 741, and/or 74r will cause the scrolling or moving of view of the entire local application display area through within the respective window, (2) after scrolling to an end of the respective local application area within the window, the cursor 920 will, then, start to move within said local application area if the user repeats the same rolling wheel operation. For the purposes of cursor window control, the tool bar or menu bar area of an application or window can be regarded as a sub-window within the respective application window. While the cursor 920 is located at such toolbar area in local mode, the user can start to navigate or browse through the menu/tool bar area sub-window. If the menu or toolbar sub-window does not show all the available buttons, rolling the wheel 74v, 741 or 74r will first cause the entire menu or toolbar to slide horizontally or to roll vertically before the cursor 920 start to browse through each individual task buttons therein, while operating another set of navigation buttons 74T / 74H provided on the remote control 710 will cause the cursor 920 to browse through each individual task button first.

FIG. 15 shows an exemplary desktop display 921 customized by a user, which includes an interactive section 94D for display of live or updated information provided by a web site, such as sports / news update, email update, live stock quote, etc. An icon within the window 912 may also be made interactive. For examples, an Email icon 95C and the number 95C' therein indicate that there is currently one new email received. Some of the application or web link or file icons displayed within the window 912 are arranged within a four by four matrix 980. Each matrix cell includes one application icon, and is identified by a matrix ID number. As shown in FIG. 5, the ID numbers 11, 14, 41 and 44 are assigned to the cells 98A, 98B, 98C, and 98D respectively, so as to facilitate easy identification of each matrix cell and to allow a user to use the number keys 720 in combination with a function key 75F provided on the remote control 710 to access the applications associated with the matrix cells and icons.

The window 912 may also includes an alert component 981, which may be situated, for example, at the bottom of the window 912 as shown. The alert component 981 includes an email-alert icon 98Z for indicating whether there is any urgent email; a deadline alert icon 98X for indicating whether a bill-pay or other type of deadline is getting close; and an appointment alert icon 98Y, etc. When there is no alert, the area 981 may automatically hide.

The display button 71Q of the remote control 710 may also service as "shortcut" for viewing and navigating menus and other information provided by the Window 912. For example, pressing the display button 71q and then the bookmark button 73X of the remote control 710 will pull down or expand a bookmark menu 93F of the window 912.

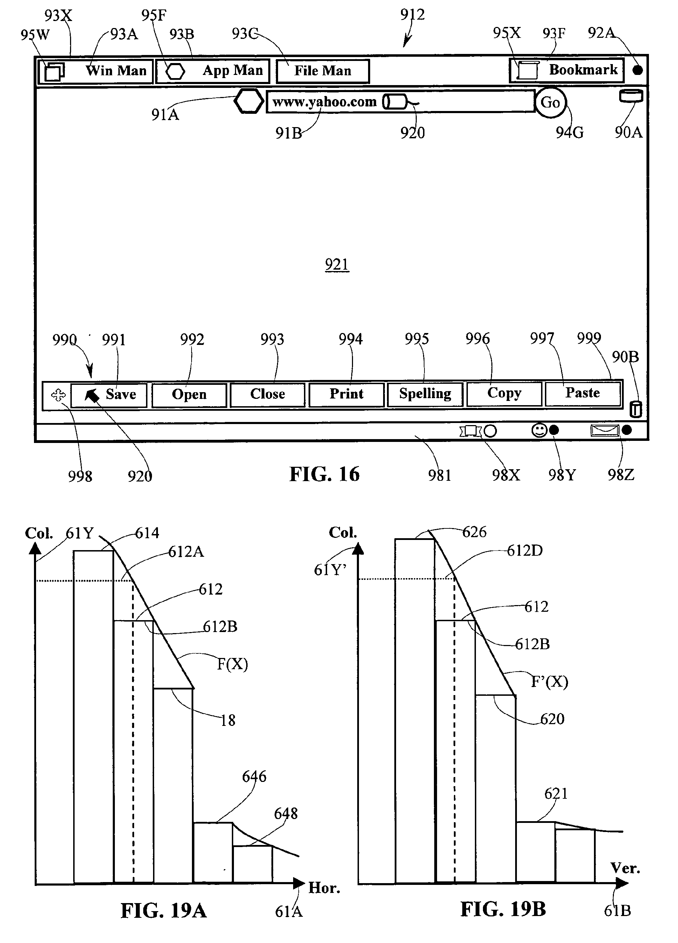

The remote control 710 also includes an "App tool" button 73I for displaying /hiding the user's favorite toolbar provided for the current window or application program. In the example of a word processor shown in FIG. 16, pressing the "App Tools" button 73I will, (i) if the toolbar 990 was not displayed, instruct the window 912' to display the toolbar 990, and (ii) cause the cursor 920 to "jump" into the toolbar area 990 in its local mode such that, the user could easily navigate or browse through these tools 991-997 using the rolling wheels 74V, 74L and 74R and/or buttons 74T / 74H of the remote control 710, and execute or "click on" any of these tools 991-997 using the "Go" button 74G; Pressing the "App Tools" button 73I again will hide the toolbar 990. It is preferred that some of the number keys 720 on the remote control 710 are predefined for access to some commonly used tools through combination with the "App tool" button 73I. For example, the combination of pressing the "App tool" key 73I and the number key "3" on the remote control 710 would be equivalent to clicking on the "close" icon 993 of FIG. 6.

It is appreciated that, using the combinations of pressing the "disp" key 71Q and other buttons on the remote control 710 may provide easy access to any application tools desired. For examples: (A) Since most of the window applications include expandable menus (or menu bar) at the top that contain listings of all commands available for such application (e.g., for a word processor, the menu bar may include "File", "Edit", "View", "Format", "Tools" menus, etc.), the combination of pressing the "disp button" 71q and the "App tools" button 73i of the remote control 710 will, (i) if the application menu bar was not displayed within the window, instruct the window 912' to display the menus or the menu bar, (ii) cause the cursor 920 to "jump" onto such menu bar in its local mode, and (iii) expand one of the menus located by the cursor 920; When forcing the cursor 920 to the right or left, it will expand the respective neighbor menu(s); The application command located by the cursor 920 in the expanded menu may then be executed or "clicked" by pressing the "Go" button 74G of the remote control 710; (B) The combination of pressing the "disp button" 71Q and the "App tools" button 73i and then the number "0" button of the remote control 710 will, (i) if the alert area 981 was not displayed within the window 912, instruct the window 912' to display the alert area 981, and (ii) cause the cursor 920 to "jump" into the alert area 981 in its local mode; The user could then click on any of the icon therein using the "Go" button 74g of the remote control 710.

Naturally, the embodiment of the present invention is not limited to the above-described examples. Various substitutions and changes in the forms and details of the devices and software systems described herein and in their operation can be made by those skilled in the art without departing from the basic concept of the invention.

## Claims

1. A method of synchronizing an animated talking toy figure's audio speech with its animation effect, said toy figure including a body having a movable body part for providing said animation effect, audio output means for reproducing a selected audio sound so as to simulate the toy figure's audio speech in response to receiving a sound signal, and a digital actuation system for actuating said movable body part, said method comprising:
transmitting an actuation control signal to said digital actuation system so as to control the actuation of said movable body part in synchronization with transmission of said sound signal to said audio output means, said actuation control signal being separate from said sound signal.

2. The method as set forth in claim 1, wherein said movable body part is the toy figure's mouth, having an open and closed states, wherein said actuation control signal contains a logic switch control signal comprising a sequence of a first and a second logic signals for representing a first and a second predefined binary values respectively, said first and second logic signals being associated with said open and closed states of said toy figure's mouth respectively.

3. A physical toy figure adapted to be controlled by a digital external actuation control signal and an external sound signal representing a selected audio sound, said actuation control signal being separate from said sound signal, said toy figure comprising:
a body including at least one movable portion, said movable portion having an open and a default closed states;
audio output means for reproducing said selected audio sound in response to the toy figure receiving said sound signal;
an electromagnetic actuation device situated within said body for actuating said movable portion, said actuation device having a first and a second states; and
an actuation control circuitry for controlling said actuation device in response to receiving said external actuation control signal;
said external sound signal being transmitted to said audio output means in synchronization with transmission of said external actuation control signal to said actuation control circuitry.

4. The toy figure as set forth in claim 3, wherein said first and second states of said actuation device are associated with said open and closed states of said movable portion respectively, and wherein said external actuation control signal contains a signal sequence comprising a sequence of a first and a second logic signals for representing a first and a second predefined binary values respectively, said first and second logic signals being associated with said open and closed states of said movable portion respectively

5. The toy figure of claim 3, further comprising a second movable portion and a second electromagnetic actuation device situated within said body for actuating said second movable portion, the two actuation devices being independently controlled by said actuation control circuitry in response to receiving said actuation control signal so as to cause independent movement of the two movable portions.

6. A physical toy figure adapted to be integrated into a multimedia system in which all multimedia components, including the sound and actuation of said physical toy figure, are digitally synchronized with one another, said toy figure comprising:
a body for simulating an appearance of a living being;
at least one movable body part for simulating an animation effect of the living being; and
a two-state electromagnetic device situated within said body for actuating said movable body part; said electromagnetic device including a coil and a magnetic plunger.

7. The toy figure of claim 6, further including body part attachment means for attaching said movable body part of the toy figure to a nearby stationary portion thereof and plunger coupling means for coupling said movable body part of the toy figure to said magnetic plunger.

8. The toy figure of claim 6, further comprising an actuation control circuitry for selectively connecting electric current to said coil in response to receiving an external digital actuation control signal transmitted to the toy figure so as to control the actuation of said two-state electromagnetic device and hence said toy figure's movable body part.

9. The toy figure of claim 8, further comprising audio output means for reproducing a selected audio sound in response to the toy figure receiving a sound signal, said sound signal being separate from said external actuation control signal.

10. The toy figure as set forth in claim 8, wherein said electromagnetic device includes an energized and a de-energized states, wherein said external actuation control signal contains a signal sequence comprising a sequence of a first and a second logic signals for representing a first and a second predefined binary values respectively, said first and second logic signals being directly associated with said energized and de-energized states respectively.
